# EUROPÄISCHE PATENTSCHRIFT

(11) **EP 1 281 822 B1**
(45) Veröffentlichungstag und Bekanntmachung des Hinweises auf die Patenterteilung: **10.12.2008**
(21) Anmeldenummer: 02017296.1
(22) Anmeldetag: 01.08.2002
(51) Int. Cl.: E04F 13/06, B29C 47/02

(54) **Profilleiste aus extrudiertem Kunststoff mit einem daran befestigten netzartigen Gittergewebestreifen, sowie Verfahren und Vorrichtung zum Herstellen dieser Profilleiste**
Profile of extruded plastics material with a mesh fabric attached thereto, method and device for producing the same
Profilé extrudé en matière plastique avec tissu à mailles fixé dessus, procédé et dispositif pour la fabrication de ce profilé

(30) Priorität: 01.08.2001 DE 10137287; 01.08.2001 DE 20112587 U
(43) Veröffentlichungstag der Anmeldung: 05.02.2003
(73) Patentinhaber: Lehrhuber, Konrad, 84144 Geisenhausen (DE)
(72) Erfinder: Lehrhuber, Konrad, 84144 Geisenhausen (DE)
(74) Vertreter: Konnerth, Dieter Hans

(56) Entgegenhaltungen:
- EP-A- 0 322 774
- EP-A- 0 915 215
- EP-A- 1 046 488
- WO-A-96/26067
- DE-A- 3 621 235
- DE-A- 19 611 468
- DE-A- 19 803 034
- DE-U- 29 904 528
- US-A- 4 581 269
- O. SCHWARZ, F.W. EBELING, B. FURTH: "Kunststoffverarbeitung" 1999, VOGEL VERLAG UND DRUCK GMBH , WÜRZBURG * Seite 54 - Seite 55 *

## Beschreibung

Die Erfindung betrifft ein Verfahren zum Herstellen einer Profilleiste aus extrudiertem Kunststoff mit mindestens einem damit verbundenen netzartigen Gittergewebestreifen gemäß dem Oberbegriff des Anspruchs 1, eine Vorrichtung zum Herstellen einer derartigen Profilleiste gemäß dem Oberbegriff des Anspruchs 7 sowie eine danach herstellbare Profilleiste gemäß dem Oberbegriff des Anspruchs 12.

Die DE 198 03 034 A1 offenbart ein gattungsgemäßes Verfahren zum Befestigen eines Armierungsgewebes aus Kunststoff an einer durch Extrudieren hergestellten gattungsgemäßen Profilleiste mittels eines Kunststoffstranges durch eine materialschlüssige Verbindung, die eine Schweißverbindung und insbesondere eine Ultraschall-Schweißverbindung sein kann. Des weiteren wird eine Verbindung im Kunststofferweichungszustand vorgeschlagen. Als ein besonderer Fall einer Verbindung wird die Coextrusion der Putzleiste mit dem Kunststoffstrang vorgeschlagen, die im weichplastischen Zustand nach der Extrusion unter Zwischenlage des Armierungsgewebes durch Zusammendrücken miteinander vereinigt werden.

Die US-A-4 581 269 offenbart eine Vorrichtung zum Extrudieren eines Profilstreifens aus Weichkunststoff, wobei der Profilstreifen im Bereich seines profilierten Befestigungsabschnitts nach dem Austritt aus einer Extrusionsdüse durch Besprühen mit Wasser gekühlt wird, so dass sich an der Oberfläche eine Haut bildet. Ein Befestigungsflansch sowie ein aus einem zweiten Extruder zugeführter Streifen aus Weichkunststoff werden im weichplastischen Zustand durch zwei Rollten gegeneinander gepresst, wobei ein Gewebestreifen zwischen dem Befestigungsflansch und dem Streifen aus Weichkunststoff angeordnet ist und mit diesen verbunden wird. Eine Kalibriereinrichtung bzw. ein Kalibrierwerkzeug ist beim Extrudieren von Weichkunststoff nicht vorgesehen.

Aus der EP 1 046 488 A2 ist ein Verfahren bekannt geworden, bei dem während dem Extrudieren eines Kunststoffprofils ein Randstreifen eines Gittergewebes in das noch plastifizierte Kunststoffmaterial eingebettet wird und im Bereich der Gittergewebemaschen vom Kunststoffmaterial durchdrungen sowie von diesem umschlossen wird. Eine zum Ausführen dieses Verfahrens vorgesehene Vorrichtung enthält ein Extrusionswerkzeug mit einem langgestreckten, an einer Stirnseite ausmündenden Formhohlraum, in den ein Kanal zum Zuführen von plastifizierter Kunststoffmasse einmündet. Ein flacher Spalt erstreckt sich durch das Extrusionswerkzeug derart hindurch, daß er in Längsrichtung den Formhohlraum schneidet. Durch den Spalt wird der Gittergewebestreifen hindurch geführt, während das plastifizierte Kunststoffmaterial über den Kanal zugeführt wird. Der im Formhohlraum üblicherweise herrschende Extrusionsdruck von 200 - 300 bar preßt jedoch das plastifizierte Kunststoffmaterial aus dem Formhohlraum seitlich in den das Gittergewebe führenden Spalt. Ist lediglich ein Randstreifen des Gittergewebes zur Einbettung vorgesehen, so wird dieser durch das in den Spalt eindringende Kunststoffmaterial zurückgeschoben mit der Folge, daß eine Einbettung in das Kunststoffprofil nicht stattfinden kann. Bei jeder Art einer Einbettung in das plastifizierte Kunststoffmaterial wird der Fluß des in den Spalt eindringenden Kunststoffmaterials verlangsamt, wodurch das Kunststoffmaterial verschmort und den Spalt verstopft, woraus schwankende Druckverhältnisse im Extrusionswerkzeug resultieren. Diese Problematik betrifft auch das in der DE 299 04 528 U1 offenbarte, mit Gittergewebe konfektionierte Kunststoffprofil.

Aus der EP 0 915 215 A2 ist ein Kantenschutz-Richtwinkel bekannt geworden, bei dem eine Abzugsleiste zur Erzielung einer stoffschlüssig-innigen Verbindung mit einem Winkelprofil-Grundkörper und zur formschlüssigen Fixierung eines Glasfaser-Gewebestreifens an das Winkelprofil anextrudiert ist. Nachteilig ist jedoch der aufwändige Herstellungsvorgang, bei dem zunächst ein Grundkörper extrudiert, kalibriert und gekühlt, getrocknet und gestanzt wird. Anschließend wird eine Abzugsleiste und bei Bedarf auch ein oder mehrere Verankerungsstreifen an den fertig produzierten Grundkörper anextrudiert, wiederum kalibriert und gekühlt, getrocknet und schließlich abgelängt. Der Aufwand gegenüber einer einfachen Extrusion ist annähernd doppelt so hoch. Die zwei räumlich hintereinander ablaufenden Vorgänge müssen für die angegebene Produktion in Linse zeitlich präzise abgestimmt sein, so daß dementsprechend das Fehlerriskio hoch ist. Eine weitere Fehlerquelle stellt das Anextrudieren eines heißen Stranges auf ein erkaltetes, in diesem Fall noch durch eine Stanzung bearbeitetes Grundprofils dar. Innere Spannungen des Grundprofils werden hier, vergleichbar üblicher Schweißtechnik, beim Aufsetzen des heißen Stranges frei oder neu erzeugt und führen zu Verformungen des gesamten Profils, so daß dieses nur eingeschränkt nutzbar oder gänzlich unbrauchbar ist.

Aufgabe der Erfindung ist es, ein Verfahren und eine Vorrichtung zum Herstellen einer eingangs genannten Profilleiste anzugeben, die einfach und produktionssicher herstellbar ist, sowie eine derartige verbesserte Profilleiste bereitzustellen.

Die Aufgabe wird durch ein Verfahren mit den Merkmalen des Anspruchs 1 gelöst. Vorteilhafte Ausgestaltungen der Erfindung sind in den abhängigen Ansprüchen angegeben.

Dadurch, daß die Profilleiste mittels eines Extrusionswerkzeugs mit zwei zum Befestigen des Gittergewebestreifens vorgesehenen Teilen extrudiert wird, daß der Gittergewebestreifen frei von Extrusionsdruck zwischen die zwei Teile der Profilleiste eingebracht wird und daß die noch plastischen Teile der Profilleiste, insbesondere beim Kalibrieren, in eine feste Verbindung aneinander gedrückt werden, so daß sie den Gittergewebestreifen zwischen sich fest halten, wird ein einfach ausführbares Verfahren bereitgestellt, das in betriebssicherer Weise den Gittergewebestreifen an der Profilleiste befestigt. Die bei dem bekannten Verfahren aufgrund der dort gewünschten Einbettung des Gittergewebestreifens in das plastifizierte Material während dem Extrudieren auftretenden Nachteile sind durch die strikte Trennung des Gittergewebestreifens von dem plastifizierten Kunststoffmaterial während dem Extrudieren beseitigt. In vorteilhafter Weise verwendet das Verfahren nur eine Extrusion im Gegensatz zu dem bekannten nachfolgenden Anextrudieren oder sogar einer getrennten zweiten Extrusion. Damit ist auch nur eine Kühlung und Trocknung der Profilleiste erforderlich.

Dabei kann im Verfahrensablauf vorgesehen sein, daß der Gittergewebestreifen noch im Extrusionswerkzeug oder anschließend an das Extrusionswerkzeug zwischen die zwei Teile der Profilleiste eingebracht wird. Im Extrusionswerkzeug kann der durch eine Trennwand oder dergleichen von dem oder den Kanälen getrennte Führungsschlitz für den Gittergewebestreifen in die erwünschte Zuordnung und Positionierung zu der Profilleiste bzw. zu deren für die Befestigung des Gittergewebestreifens bestimmten Teile gebracht werden. Noch im Extrusionswerkzeug kann diese Trennung aufgehoben werden, sobald die Vorformung der Profilleiste beendet ist und sie nicht mehr dem Extrusionsdruck unterliegt. Andererseits kann das tatsächliche Zuführen des Gittergewebestreifens an oder zwischen die Teile der Profilleiste auch nach dem Austritt aus dem Extrusionswerkzeug erfolgen.

Vorzugsweise wird die Profilleiste einstückig extrudiert. Gemäß einer Variante des Verfahrens kann jedoch auch das zweite Teil und/oder ein oder mehrere weitere Teile zum Befestigen des Gittergewebestreifiens oder eines weiteren Gittergewebestreifens mittels des Extrusionswerkzeugs, eines zusätzlichen Extrusionswerkzeugs oder eines Coextrusionswerkzeugs hergestellt werden. Das zusätzliche Extrusionswerkzeug und/oder das Coextrusionswerkzeug kann bzw. können an dem Extrusionswerkzeug angeordnet oder integriert sein. Andererseits kann die Zuführung des zweiten oder weiteren Teils auch unmittelbar anschließend an den Austritt der Profilleiste aus dem Extrusionswerkzeug aus einem getrennten Werkzeug erfolgen. So kann zweckmäßigerweise das Verfahren derart geführt sein, daß der Gittergewebestreifen anschließend an das Extrusionswerkzeug auf der extrudierten Profilleiste bzw. deren ersten Teil aufliegt und das zweite Teil dann auf den Gittergewebestreifen aufgelegt wird.

Generell können eine beliebige Anzahl von Teilen der Profilleiste hergestellt werden, die zum Befestigen von einem oder von mehreren Gittergewebestreifen mit der Profilleiste oder miteinander verbunden werden können.

Des weiteren wird die Aufgabe durch eine Vorrichtung mit den Merkmalen des Anspruchs 7 gelöst. Dadurch, daß der Extrusionskanal und die Zuführeinrichtung bis zur unter Extrusionsdruck erfolgten Vorformung der zur Aufnahme des Gittergewebestreifens vorbereiteten Profilleiste getrennt sind und das Extrusionswerkzeug den Gittergewebestreifen an die Aufnahmeposition an der Profilleiste führt, und daß eine nachgelagerte Kalibriereinrichtung die den Gittergewebestreifen haltenden Teile der Profilleiste in eine feste Verbindung aneinander preßt, kann in einfacher und betriebssicherer Weise die Profilleiste hergestellt werden.

Vorzugsweise enthält die Zuführeinrichtung für den Gittergewebestreifen einen Führungsschlitz, der im Extrusionswerkzeug von dem zumindest einen Kanal getrennt verläuft. Der beispielsweise von einer Rolle abgewickelte Gittergewebestreifen wird z. B. seitlich zum Extrusionswerkzeug zugeführt und in diesem umgelenkt, bevor er der Profilleiste zugeführt wird. Die Zuführung des Gittergewebestreifens kann aber auch von oben oder unten oder längs durch das Extrusionswerkzeug erfolgen.

Je nach Lage der Führung des Gittergewebestreifens im Extrusionswerkzeug kann vorgesehen sein, daß der zweite Kanal abschnittsweise getrennt vom ersten Kanal und unter Umgehung der Zuführung des Gittergewebestreifens verläuft.

Zweckmäßigerweise verläuft der erste Kanal im Extrusionswerkzeug im wesentlichen linear in Längsrichtung, er kann jedoch auch bogenförmig verlaufen, insbesondere zur Anpassung an die Zuführeinrichtung. Der gänzlich einstückige Kanal oder die beiden anfangs getrennten und dann zusammengeführten Kanäle könne sich auch unter Umgehung der Zuführeinrichtung an den Verlauf des Gittergewebestreifens annähern.

Des weiteren kann die Vorrichtung ein zusätzliches Extrusionswerkzeug oder ein Coextrusionswerkzeug aufweisen, das zum Herstellen des zweiten Teils und/oder eines oder mehrerer weiteren Teile vorgesehen ist, die zum Befestigen des Gittergewebestreifens oder eines weiteren Gittergewebestreifens dienen. Das zusätzliche Extrusionswerkzeug und/oder das Coextrusionswerkzeug kann an dem Extrusionswerkzeug angeordnet sein oder an diesem integriert sein.

Die Aufgabe wird des weiteren durch eine Profilleiste mit den Merkmalen des Anspruchs 12 gelöst. Durch das Verpressen der beiden Teile nach deren Extrusion wird das zugeführte Gittergewebe vom hohen Extrusionsdruck im Extrusionswerkzeug entkoppelt. Das Kunststoffmaterial kann somit nicht in den das Gittergewebe zuführenden Spalt oder Führungsschlitz eindringen, so daß auch kein Verstopfen oder Verschmoren des Spaltes auftreten kann. Somit sind auch die üblicherweise in einem Extrusionswerkzeug vorhandenen stabiles Druckverhältnisse erzielbar. Daher sind auch feingliedrige und komplexe Kunststoffprofile herstellbar. Die Extrusion der gesamten Profilleiste erfolgt somit zeitgleich in demselben Extrusionswerkzeug und erfordert daher keine gesonderte präzise Abstimmung.

Zweckmäßigerweise ist wenigstens ein Teil oder Abschnitt des Gittergewebestreifens mit der Profilleiste verbunden, wobei dieses Teil bzw. der Abschnitt in der Mitte oder allgemein zwischen den beiden Rändern des Gittergewebestreifens angeordnet ist und insbesondere ein Randstreifen des mindestens einen Gittergewebestreifens ist.

Das eine Teil kann ein Abschnitt eines Grundprofils der Profilleiste sein und das andere Teil kann ein coextrudierter Abschnitt der Profilleiste sein. Beide Teile können als zwei Schenkel gebildet sein, die von dem Grundprofil abstehen oder von denen ein Schenkel ein Teil des Grundprofils ist.

Der Gittergewebestreifen kann auch durch zwei oder mehrere Teile an dem Grundprofil der Profilleiste und/oder einem Schenkel der Profilleiste gehalten sein.

Vorzugsweise ist die Profilleiste aus Kunststoff hergestellt. Unter den Kunststoffen sind Polyvinylchlorid, Polyethylen, Polypropylen, Polystyrol und Polyurethan besonders bevorzugt. Der Querschnitt des Kunststoffanteils der Profilleiste bleibt über die Profilleistenlänge gleich, so daß die Profilleiste im Extrusionsverfahren kostengünstig hergestellt werden kann. Durch Coextrusion können weich eingestellte Teile der Profilleiste, insbesondere Segmente einer Schutzlasche, Dichtlippen und/oder Verbindungsstege, aus einstückig angeformtem, weichem Kunststoffmaterial hergestellt werden.

Nachfolgend wird die Erfindung anhand mehrerer Ausführungsbeispiele der Vorrichtung sowie der Profilleiste unter Bezugnahme auf die Zeichnungen näher erläutert. Es zeigt:
- Fig. 1: in einer isometrischen Ansicht eine erfindungsgemäße Vorrichtung zum Extrudieren einer Profilleiste und zum Befestigen eines Gittergewebestreifens an der Profilleiste;
- Fig. 2: in einer Draufsicht die erfindungsgemäße Vorrichtung;
- Fig. 3: in einer Seitenansicht die erfindungsgemäße Vorrichtung;
- Fig. 4A bis 4C: in Querschnittansichten die Vorrichtung sowie die damit hergestellte Profilleiste;
- Fig. 5A bis 5C: in Querschnittansichten ein weiteres Ausführungsbeispiel der Vorrichtung;
- Fig. 6: in einer Querschnittansicht ein Ausführungsbeispiel einer erfindungsgemäßen Profilleiste für einen Laibungsanschluß;
- Fig. 7: in einer Querschnittansicht ein weiteres Ausführungsbeispiel einer erfindungsgemäßen Profilleiste für eine Eckbewehrung;
- Fig. 8: in einer Querschnittansicht ein weiteres Ausführungsbeispiel einer erfindungsgemäßen Profilleiste für eine Dehnungsfuge;
- Fig. 9: in einer Querschnittansicht ein weiteres Ausführungsbeispiel einer erfindungsgemäßen Profilleiste; und
- Fig. 10: in einer isometrischen Ansicht ein weiteres Ausführungsbeispiel einer erfindungsgemäßen Vorrichtung zum Extrudieren einer Profilleiste und zum Befestigen eines Gittergewebestreifens an der Profilleiste.

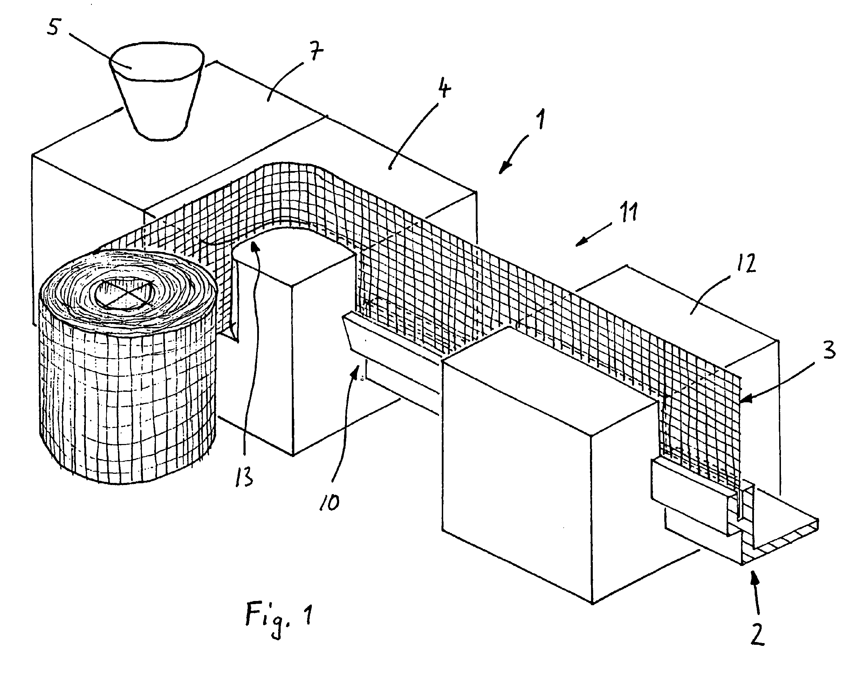

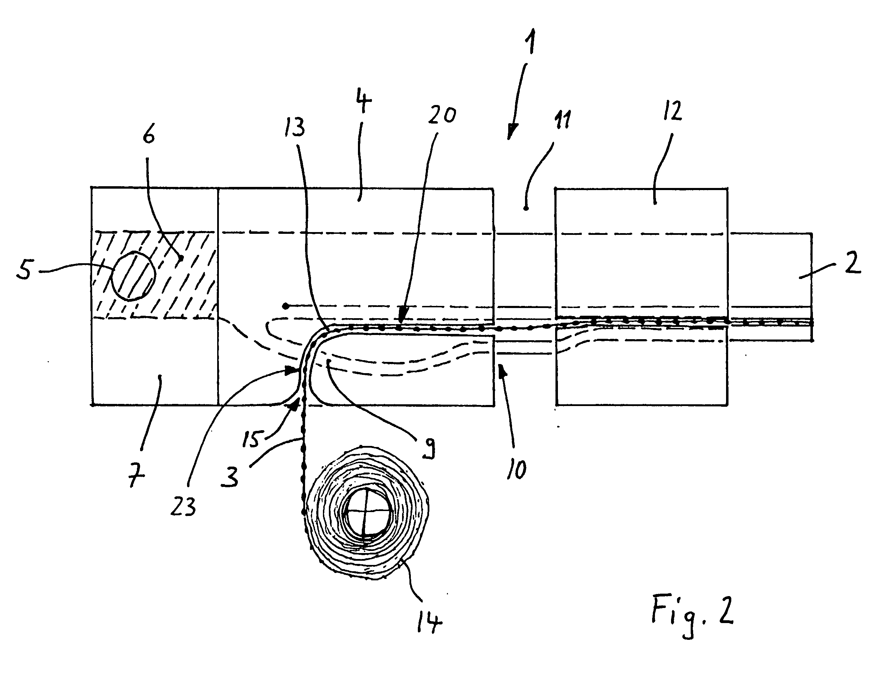

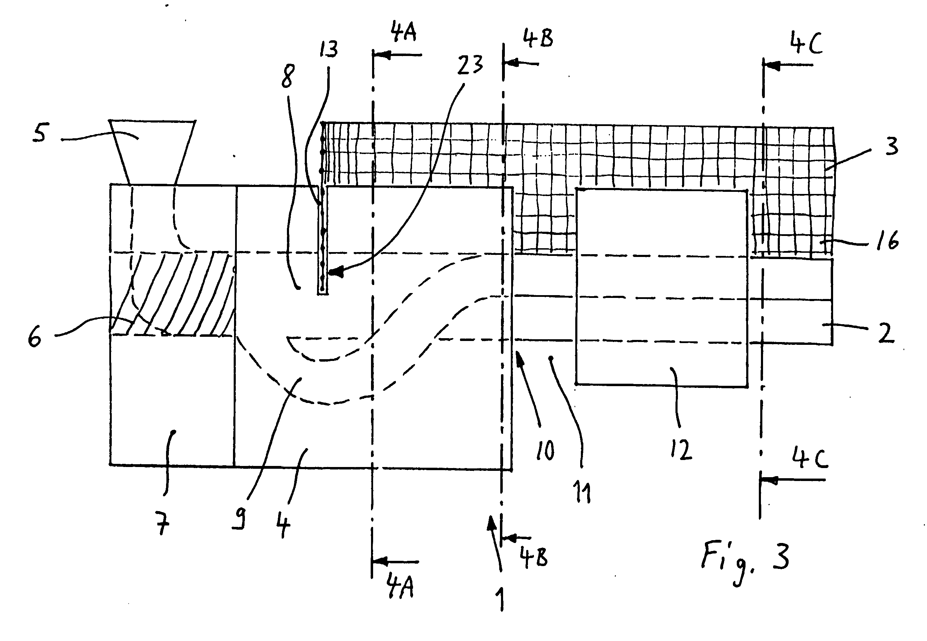

Eine erfindungsgemäße Vorrichtung 1 (siehe Fig. 1 bis 3) zum Herstellen einer Kunststoff-Profilleiste 2 und zum Befestigen eines netzartigen Gittergewebestreifens 3 an der Profilleiste 2 enthält ein Extrusionswerkzeug 4, dem aus einem vorgelagerten, eine Befüllöffnung 5 für Kunststoffgranulat und eine Extruderschnekke 6 aufweisenden Extruder 7 (nur schematisch dargestellt) eine erhitzte, plastifizierte Kunststoffmasse unter einem Extrusionsdruck von beispielsweise 150 bis 200 bar zugeführt wird. Im Extrusionswerkzeug 4 wird die Kunststoffmasse in zumindest einem Kanal und gemäß dem in den Fig. 2 bis 5 dargestellten Beispiel in den Kanälen 8 und 9 bis an einen Werkzeugaustritt 10 geführt, wobei das Extrusionswerkzeug 4 in diesem Bereich temperiert ist und die Kunststoffmasse in den Kanälen 8 und 9 dem Extrusionsdruck weiterhin ausgesetzt ist. Am Werkzeugaustritt 10 entspricht der Querschnitt des bzw. der Kanäle 8 und 9 dem Querschnitt der herzustellenden Profilleiste 2. Nach dem Austritt aus dem Extrusionswerkzeug 4 endet die Einwirkung des Extrusionsdruckes auf die die Profilleiste 2 bildende Kunststoffmasse, die mit dem gebildeten Querschnittsprofil und in noch erwärmtem weichplastischem Zustand in eine sich unmittelbar oder in einem Abstand 11 anschließende Kalibriereinrichtung 12 weiter bewegt wird.

Die Vorrichtung 1 enthält weiterhin eine Zuführeinrichtung für den Gittergewebestreifen 3 mit einem im Extrusionswerkzeug 4 gebildeten Führungsschlitz 13, durch den der Gittergewebestreifen 3, der beispielsweise von einer seitlich des Extrusionswerkzeugs 4 angeordneten Rolle 14 abgewickelt wird und durch eine Eintrittsöffnung 15 eintritt, gezogen wird. In diesem Fall folgt der Führungsschlitz 13 einer 90°-Umlenkung, jedoch kann bei einer unterschiedlichen Anordnung des Extruders 7 und des Extrusionswerkzeugs 4 beispielsweise auch ein linear verlaufender Führungsschlitz 13 vorgesehen sein. Die Höhe des Führungsschlitzes 13 ist derart festgelegt, daß er zumindest einen Randabschnitt 16 des Gittergewebestreifens 3 im Extrusionswerkzeug 4 führt.

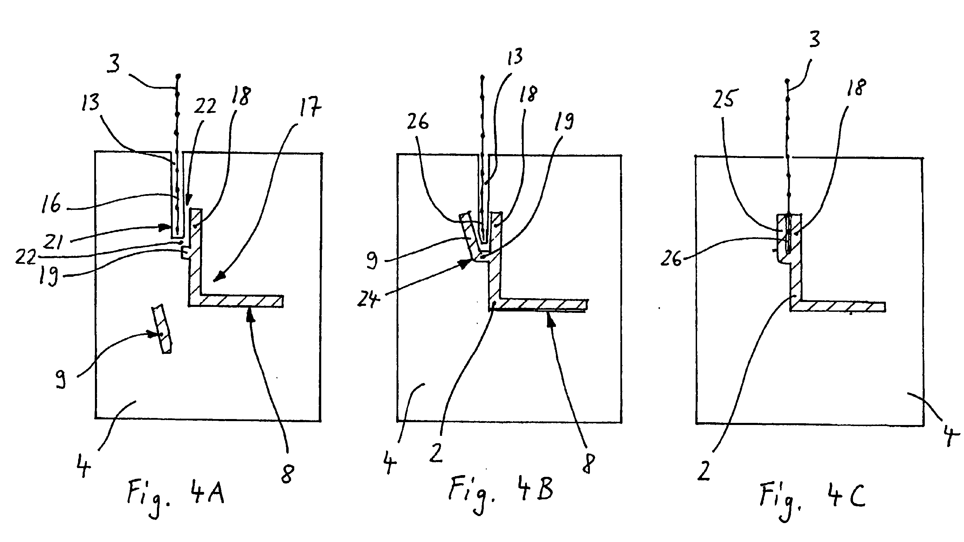

Der im Extrusionswerkzeug 4 im wesentlichen linear verlaufende Kanal 8 weist einen Winkelquerschnitt auf (siehe Fig. 4A), der einen Hauptabschnitt 17 der Profilleiste 2 mit einem sich anschließenden Schenkel 18 und einem Ansatz 19 bildet. Der Führungsschlitz 13 verläuft in einem Zuführabschnitt 20 parallel zu dem Kanal 8, wobei das Unterende 21 des Führungsschlitzes 13 neben dem Schenkel 18 und benachbart zu dem Ansatz 19 angeordnet ist, jedoch von diesen durch eine dünne Wand 22 getrennt ist. Der Kanal 9 verläuft vom Extruder 7 kommend getrennt vom Kanal 8 zunächst unter dem seitlichen Abschnitt 23 des Führungsschlitzes 13 hindurch (siehe Fig. 2, 3 und 4A), steigt dann an und ist noch vor dem Werkzeugaustritt 10 mit dem Kanal 8 derart zusammengeführt (Fig. 4B), daß das Unterende 24 des Kanals 9 am Ansatz 19 anliegt, zu diesem geöffnet ist und unter Druck- und Temperatureinwirkung eine einstückig extrudierte Profilleiste 2 ergibt. Der Kanal 9 ist nach oben hin nach außen geneigt und bildet einen zweiten Schenkel 25 der Profilleiste 2, so daß in dem etwa V-förmigen Zwischenraum zwischen dem ersten Schenkel 18 und dem zweiten Schenkel 25 der durch die dünne Wand 22 von beiden Schenkeln 18, 25 bzw. Kanälen 8, 9 getrennte Führungsschlitz 13 verläuft. Die durch die Wand 22 gebildete Trennung zwischen dem Führungsschlitz 13 und den beiden Kanälen 8 und 9 besteht bis zum Werkzeugaustritt 10, so daß bis dahin der Extrusionsdruck in den beiden Kanälen 8 und 9 aufrechterhalten werden kann, während der Unterrand 26 des Gittergewebestreifens 3 schon zwischen den Schenkeln 18, 25 vorpositioniert ist, jedoch von der Kunststoffmasse noch getrennt ist und dem Extrusionsdruck daher nicht unterworfen ist.

In der sich anschließenden Kalibriereinrichtung 12 werden die beiden noch plastischen Schenkel 18 und 25 der Profilleiste 2 durch eine entsprechende Führung in dem Kalibrierwerkzeug aneinander gepreßt, wodurch sich die Schenkel 18 und 25 in die Maschen des Gittergewebestreifens 3 eindrücken und fest aneinander anhaften (siehe Fig. 4C). Die Profilleiste 2 wird in der Kalibriereinrichtung 12 abgekühlt, so daß die aneinander anhaftenden Schenkel 18 und 25 starr werden und eine feste Verbindung für den Gittergewebestreifen 3 bzw. dessen Unterrand 26 an der nun formstabilen Profilleiste 2 bilden.

Der Gittergewebestreifen 3 wird vorzugsweise mit einer Beschichtung versehen, die beim Erwärmen eine verbesserte Klebefähigkeit mit dem Kunststoff der Profilleiste 2 aufweist und damit die Haltbarkeit und Festigkeit der Verbindung erhöht.

Durch einen geringen Abstand 11 zwischen dem Werkzeugaustritt 10 und der Kalibriereinrichtung 12 wird ein Abkühlen der Profilleiste 2 verlangsamt, so daß durch eine höhere Eintrittstemperatur der Profilleiste 2 beim Eintritt in die Kalibriereinrichtung 12 und die dadurch noch weichere Kunststoffmasse die Verbindung der beiden Schenkel 18 und 25 und damit die Festigkeit der Verbindung zwischen der Profilleiste 2 und dem Gittergewebestreifen 3 verbessert wird.

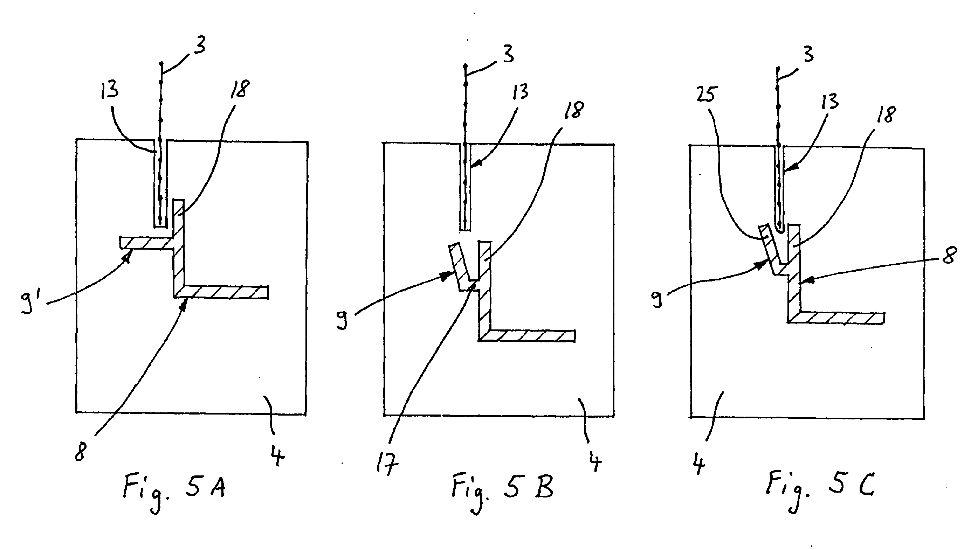

In einer alternativen Gestaltung enthält das Extrusionswerkzeug 4 zwei Kanäle 8 und 9, die am Eintritt und über die Länge des Extrusionswerkzeugs 4 in der in Fig. 5B gezeigten Querschnittanordnung miteinander verbunden sind, jedoch anfangs unterhalb des Führungsschlitzes 13 verlaufen und von unten in Richtung der Ebene des Gittergewebestreifens 3 ansteigend an dessen Randabschnitt 16 bzw. dessen Unterrand 26 herangeführt werden (Fig. 5C), bis der Unterrand 26 zwischen den beiden Schenkeln 18 und 25 angeordnet ist (entspricht Fig. 4B). Die Profilleiste 2 wird somit mit ihren beiden Schenkeln 18 und 25 über die Länge des Extrusionswerkzeugs 4 einstückig extrudiert.

Bei einem abgewandelten Ausführungsbeispiel des eingangs beschriebenen Extrusionswerkzeugs 4 (siehe Fig. 5A) ist der Kanal 9' über die Länge des Extrusionswerkzeugs 4 in Verbindung mit dem Kanal 8, wobei er zunächst am Fuß des Schenkels 18 (entspricht der Position des Ansatzes 19 des ersten Ausführungsbeispiels) in horizontaler Ausrichtung ansetzt und somit kurz unterhalb des Unterrandes des Führungsschlitzes 13 des Gittergewebestreifens 3 verläuft (Fig. 5A), der z. B. von der Seite des Extrusionswerkzeugs 4 kommend verläuft (gemäß Fig. 1). Im weiteren Verlauf durch das Extrusionswerkzeug 4 ist der Kanal 9' aus dieser Stellung unter kontinuierlicher Verschiebung seines Querschnitts am Ansatz 17 abgebogen und aufwärts gerichtet gebildet, bis er die Stellung des Kanals 9 in

Fig. 4B entsprechend dem ersten Ausführungsbeispiel einnimmt. Am Werkzeugaustritt 10 wie auch in der Kalibriereinrichtung 12 (Fig. 4C) gleicht somit die Anordnung des Querschnitts der Profilleiste 2 mit den beiden Schenkeln 18 und 25 und der Führung des Gittergewebestreifens 3 derjenigen des ersten Ausführungsbeispiels.

Bei einer Variante der Vorrichtung kann ein zweiter Gittergewebestreifen zugeführt werden und mit der Profilleiste verbunden werden. Beispielsweise wird der zweite Gittergewebestreifen von der zum ersten Gittergewebestreifen gegenüberliegenden Seite in das Extrusionswerkzeug 4 zugeführt und am Teil oder Schenkel 18 durch einen weiteren Schenkel in vergleichbarer Weise befestigt.

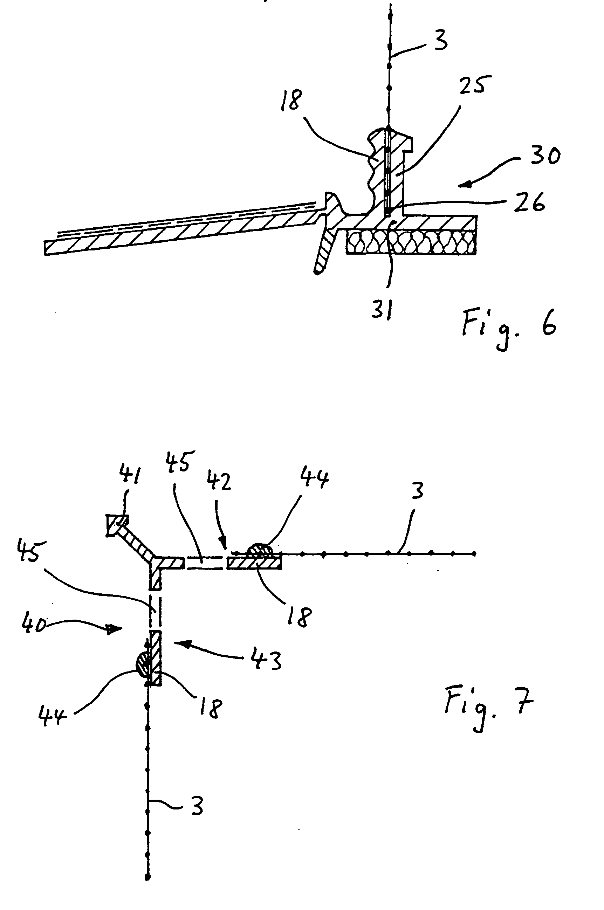

Die in Fig. 6 dargestellte und mit der voranstehend beschriebenen Vorrichtung hergestellte Profilleiste 30 ist für einen Laibungsanschluß beim Verputzen von Mauerwerk vorgesehen. Für diesen Zweck vorgesehene Profilleisten sind beispielsweise aus der DE 298 15 292 U1 bekannt. Die beiden Schenkel 18 und 25 erstrecken sich von einem Basisabschnitt 31 rechtwinklig und parallel und halten zwischen sich den Unterrand 26 bzw. Randabschnitt 16 des Gittergewebestreifens 3 fest.

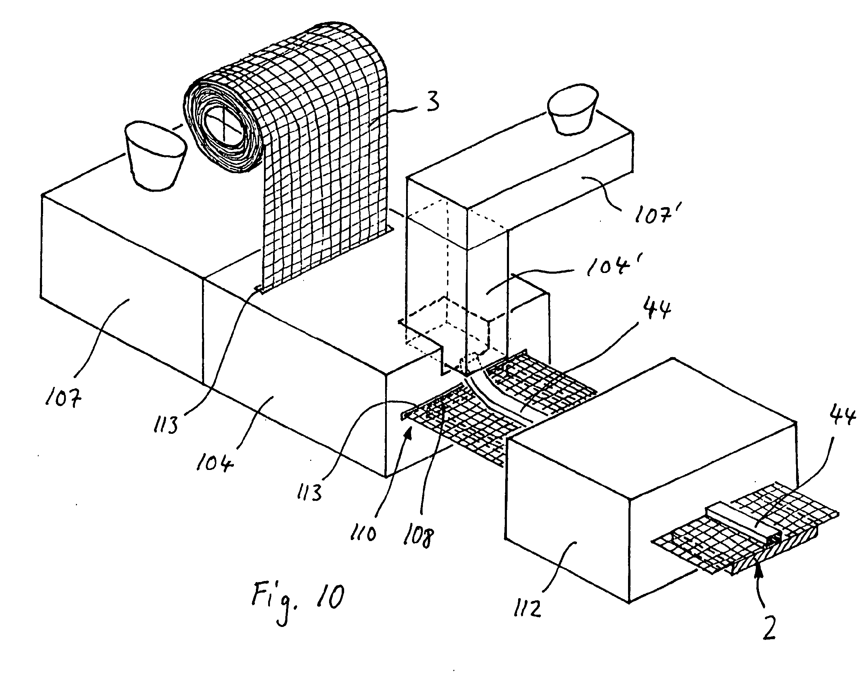

Die in Fig. 7 dargestellte und mit der nachstehend anhand von Fig. 10 beschriebenen Vorrichtung hergestellte Profilleiste 40 ist für eine Eckbewehrung von insbesondere Wärmedämmschichten auf Mauerwerk vorgesehen. Bei diesem sogenannten Gewebeeckwinkel ist eine Abzugskante 41 eingeformt. An jedem Schenkelteil 42 und 43 halten die jeweiligen Schenkel 18 den Randabschnitt 16 des Gittergewebestreifens 3 fest, auf den ein Streifen 44 aus plastischem Kunststoffmaterial aufgelegt und durch Anpressen mit dem Schenkel 18 verbunden ist. In den Schenkelteil 42 und 43 können Stanzungen 45 ohne Verletzung des Gittergewebestreifens 3 kontinuierlich im Fertigungsprozeß ausgeführt werden.

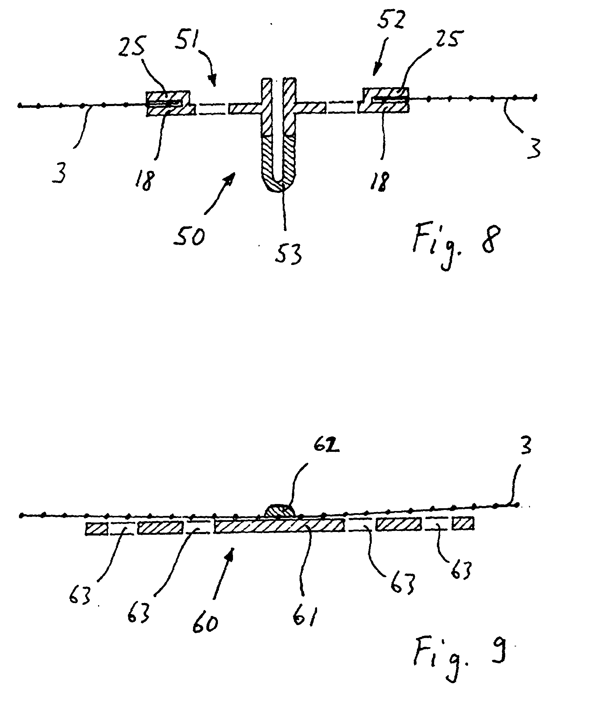

Die in Fig. 8 dargestellte und mit einer der voranstehend beschriebenen Vorrichtung entsprechenden Vorrichtung hergestellte Profilleiste 50 ist für eine Dehnungsfuge vorgesehen. Die beiden Profilleistenteile 51 und 52 sind über ein weiches Mittelteil 53 verbunden, das durch Coextrusion hergestellt wird.

Die in Fig. 9 dargestellte Profilleiste 60 enthält ein flaches Grundprofil 61. Ein darauf liegender Gittergewebestreifen 3 ist mittig mittels eines Streifens 62 aus Kunststoffmaterial, der an dem Grundprofil 61 angeheftet ist, an der Profilleiste z. B. mittels der nachfolgend beschriebenen Vorrichtung (siehe Fig. 10) befestigt. Unmittelbar nach dem Herstellen der Profilleiste 60 können Stanzungen 63 am Grundprofil kontinuierlich im Fertigungsprozeß ausgeführt werden, wobei der Gittergewebestreifen 3 vorher beispielsweise hochgeklappt wird.

Bei einem weiteren Ausführungsbeispiel einer erfindungsgemäßen Vorrichtung (siehe Fig. 10) enthält das Extrusionswerkzeug 104 einen flachen horizontal verlaufenden Kanal 108 für die aus dem Extruder 107 unter Extrusionsdruck zugeführte Kunststoffmasse, die eine herzustellende Profilleiste bildet. Oberhalb des Kanals 108 wird von der Oberseite der Gittergewebestreifen 3 zugeführt und mit dem Führungsschlitz 113 umgelenkt, der zum Werkzeugaustritt 110 hin geringfügig oberhalb des Kanals 108 und von diesem getrennt verläuft. Ein zweiter Extruder 107' liefert über ein Zusatz-Extrusionswerkzeug 104' erhitzte Kunststoffmasse an die Oberseite des am Werkzeugaustritt 110 austretenden Gittergewebestreifens 3. Der sich drucklos auflegende zumindest teilplastische Streifen wird in der sich anschließenden Kalibriereinrichtung 112 an die noch teilplastische unterhalb liegende Proflileiste angepreßt und mit dieser verbunden, so daß der Gittergewebestreifen 3 von der Einheit aus der Profilleiste und dem Streifen festgehalten ist. Schließlich wird die fertiggestellte Profilleiste 2 abgekühlt.

Das Extrusionswerkzeug kann auch zwei oder mehrere Auslaßöffnungen aufweisen, so daß zumindest zwei Streifen kontinuierlich auf den Gittergewebestreifen 3 aufgelegt und mit der Profilleiste verbunden werden.

### Bezugszeichenliste

- 1: Vorrichtung
- 2: Profilleiste
- 3: Gittergewebestreifen
- 4: Extrusionswerkzeug
- 5: Befüllöffnung
- 6: Extruderschnecke
- 7: Extruder
- 8: Kanal
- 9: Kanal
- 10: Werkzeugaustritt
- 11: Abstand
- 12: Kalibriereinrichtung
- 13: Führungsschlitz
- 14: Rolle
- 15: Eintrittsöffnung
- 16: Randabschnitt
- 17: Hauptabschnitt
- 18: Schenkel
- 19: Ansatz
- 20: Zuführabschnitt
- 21: Unterende
- 22: Wand
- 23: seitlicher Abschnitt
- 24: Unterende
- 25: zweiter Schenkel
- 26: Unterrand

- 30: Profilleiste

- 31: Basisabschnitt

- 40: Profilleiste
- 41: Abzugskante
- 42: Schenkelteil
- 43: Schenkelteil
- 44: Streifen
- 45: Stanzung

- 50: Profilleiste
- 51: Profilleistenteil
- 52: Profilleistenteil
- 53: Mittelteil

- 60: Profilleiste
- 61: Grundprofil
- 62: Streifen
- 63: Stanzung

- 104: Extrusionswerkzeug
- 104: Zusatz- Extrusionswerkzeug
- 107: Extruder
- 107': zweiter Extruder
- 108: Kanal
- 110: Werkzeugaustritt
- 112: Kalibriereinrichtung
- 113: Führungsschlitz

## Patentansprüche

1. Verfahren zum Herstellen einer Profilleiste (2) aus extrudiertem Kunststoff mit mindestens einem mit der Profilleiste (2) verbundenen netzartigen Gittergewebestreifen (3), wobei
die Profilleiste (2) mittels eines Extrusionswerkzeugs (4) mit zwei zum Befestigen des Gittergewebestreifens (3) vorgesehenen Teilen (18, 25) extrudiert wird,
der Gittergewebestreifen (3) frei von Extrusionsdruck zwischen die zwei Teile (18, 25) der Profilleiste (2) eingebracht wird und
die noch plastischen Teile (18, 25) der Profilleiste (2) in eine feste Verbindung aneinander gedrückt werden, so dass sie den Gittergewebestreifen (3) zwischen sich fest halten,
**dadurch gekennzeichnet,**
**dass** die noch plastischen Teile (18, 25) der Profilleiste (2) aus kalibrierbarem Hartkunststoff hergestellt werden und beim sich an das Extrudieren anschließenden Kalibrieren der Profilleiste (2) in einer dem Extrusionswerkzeug (4) nachgelagerten Kalibriereinrichtung (12) über eine Strecke formstabil geführt und
in die den Gittergewebestreifen (3) haltende feste Verbindung aneinander gedrückt werden.

2. Verfahren nach Anspruch 1,
**dadurch gekennzeichnet,**
**dass** die zwei Teile als Profilschenkel (18, 25) der Profilleiste (2) gebildet werden und dass die Profilleiste (2) mit den Profilschenkeln (18, 25) einstückig extrudiert wird,
**dass** zumindest ein Teilstreifen (16) des Gittergewebestreifens (3) frei von Extrusionsdruck durch das Extrusionswerkzeug (4) geführt wird und zumindest ein Abschnitt (26) des Teilstreifens (16) des Gittergewebestreifens (3) zwischen die zwei Profilschenkel (18, 25) der Profilleiste (2) eingebracht wird,
**dass** die Profilleiste (2) in der Kalibriereinrichtung (12) über eine Strecke formstabil geführt und dabei gekühlt wird, wobei die noch plastischen Profilschenkel (18, 25) der Profilleiste (2) in der Kalibriereinrichtung (12) aneinander gedrückt werden und dabei miteinander eine feste Verbindung ausbilden, so dass sie den Abschnitt (26) des Gittergewebestreifens (3) zwischen sich fest halten.

3. Verfahren nach Anspruch 1,
**dadurch gekennzeichnet,**
**dass** zumindest zwei zum Befestigen des Gittergewebestreifens (3) vorgesehene Teile (18, 44; 61, 62) der Profilleiste (40; 60) mittels eines jeweiligen Extrusionswerkzeugs (104, 104') extrudiert werden,
**dass** zumindest ein Teilstreifen (16) des Gittergewebestreifens (3) frei von Extrusionsdruck durch das erste Extrusionswerkzeug (104) oder anschließend an das erste Extrusionswerkzeug (104) zugeführt wird und
**dass** zumindest ein von den Rändern des Gittergewebestreifens (3) beabstandeter Abschnitt des Teilstreifens (16) des Gittergewebestreifens (3) zwischen die zwei Teile (18, 44; 61, 62) der Profilleiste (40; 60) eingebracht wird,
**dass** die Profilleiste (40; 60) in der Kalibriereinrichtung (12) über eine Strecke formstabil geführt und dabei gekühlt wird, wobei die noch plastischen Teile (18, 44; 61, 62) der Profilleiste (40; 60) in der Kalibriereinrichtung (112) aneinander gedrückt werden und dabei miteinander eine feste Verbindung ausbilden, so dass sie den Abschnitt des Teilstreifens (16) des Gittergewebestreifens (3) zwischen sich fest hatten.

4. Verfahren nach einem der Ansprüche 1 bis 3,
**dadurch gekennzeichnet, dass** das zweite Teil (25) und/oder ein weiteres Teil zum Befestigen des Gittergewebestreifens (3) oder eines weiteren Gittergewebestreifens mittels des Extrusionswerkzeugs, eines zusätzlichen Extrusionswerkzeugs oder eines Coextrusionswerkzeugs (104') hergestellt wird bzw. werden.

5. Verfahren nach Anspruch 4,
**dadurch gekennzeichnet, dass** das zusätzliche Extrusionswerkzeug und/oder das Coextrusionswerkzeug (104') an dem Extrusionswerkzeug (4) angeordnet oder integriert ist bzw. sind.

6. Verfahren nach einem der Ansprüche 3 bis 5,
**dadurch gekennzeichnet, dass** der Gittergewebestreifen (3) anschließend an das Extrusionswerkzeug (4) auf der extrudierten Profilleiste bzw. deren ersten Teil aufliegt und dass das zweite Teil (44) auf den Gittergewebestreifen (3) aufgelegt wird.

7. Vorrichtung zum Herstellen einer Profilleiste (2) aus extrudiertem Kunststoff mit mindestens einem damit verbundenen netzartigen Gittergewebestreifen (3), wobei ein Extrusionswerkzeug (4) zumindest einen Extrusionskanal (8, 9) für die die Profilleiste (2) bildende und von einem Extruder (7) zugeführte Kunststoffmasse und eine Zuführeinrichtung (13) für den Gittergewebestreifen (3) aufweist,
**dadurch gekennzeichnet,**
**dass** der Extrusionskanal (8, 9) und die Zuführeinrichtung (13) für den Gittergewebestreifen (3) bis zum Werkzeugaustritt (10) getrennt verlaufen, dass die Zuführeinrichtung (13) für den Gittergewebestreifen (3) durch das Extrusionswerkzeug (4) zum Werkzeugaustritt (10) verläuft,
**dass** die Zuführeinrichtung (13) am Werkzeugaustritt (10) den Gittergewebestreifen (3) in der richtigen Lage zur Profilleiste (2) positioniert, und
**dass** eine Kalibriereinrichtung (12) dem Extrusionswerkzeug (4) nachgelagert angeordnet ist und die Führung in der Kalibriereinrichtung (12) das Verbinden von den Gittergewebestreifen (3) haltenden Teile (18, 25) der Profilleiste (2) mit dem Gittergewebestreifen (3) durch Aneinanderpressen bewirkt.

8. Vorrichtung nach Anspruch 7,
**dadurch gekennzeichnet, dass** zwei Extrusionskanäle vorgesehen sind und dass der zweite Extrusionskanal (9) abschnittsweise getrennt vom ersten Extrusionskanal (8) und die Zuführeinrichtung (13) umgehend verläuft.

9. Vorrichtung nach Anspruch 7 oder 8,
**dadurch gekennzeichnet, dass** der erste Extrusionskanal (8) im Extrusionswerkzeug (4) im wesentlichen in Längsrichtung verläuft.

10. Vorrichtung nach einem der Ansprüche 7 bis 9,
**dadurch gekennzeichnet, dass** ein zusätzliches Extrusionswerkzeug oder ein Coextrusionswerlkzeug vorgesehen ist zum Herstellen des zweiten Teils und/oder eines weiteren Teils zum Befestigen des Gittergewebestreifens (3) oder eines weiteren Gittergewebestreifens.

11. Vorrichtung nach Anspruch 10,
**dadurch gekennzeichnet, dass** das zusätzliche Extrusionswerkzeug und/oder das Coextrusionswerkzeug (104') an dem Extrusionswerkzeug (4) angeordnet oder integriert ist bzw. sind.

12. Profilleiste (2; 40; 60) aus extrudiertem Kunststoff mit einem mit der Profilleiste (2; 40; 60) verbundenen netzartigen Gittergewebestreifen (3),
wobei die Profilleiste (2; 40; 60) zumindest zwei extrudierte Teile (18, 25; 18, 44; 61, 62) aufweist und der Gittergewebestreifen (3) zwischen den beim Extrudieren vorgeformten und im plastischen Zustand aneinander gepressten Teilen (18, 25; 18, 44; 61, 62) der Profilleiste (2; 40; 60) gehalten ist,
**dadurch gekennzeichnet,**
**dass** die extrudierten Teile (18, 25; 18, 44; 61, 62) aus kalibriertem Hartkunststoff bestehen und
**dass** die Profilleiste (2; 40; 60) nach einem Verfahren gemäß einem der Ansprüche 1 bis 6 bzw. mit einer Vorrichtung nach einem der Ansprüche 7 bis 11 hergestellt ist.

## Claims

1. Method for producing a profile (2) from extruded plastics material with at least one net-like mesh fabric strip (3) joined to the profile (2),
the profile (2) being extruded by means of an extrusion tool (4) with two parts (18, 25) provided for fixing the mesh fabric strip (3),
the mesh fabric strip (3) being introduced between the two parts (18, 25) of the profile (2) in a manner free of extrusion pressure, and
the still plastic parts (18, 25) of the profile (2) being pressed against each other in a firm joint, so that they hold the mesh fabric strip (3) firmly between them,
**characterized**
**in that** the still plastic parts (18, 25) of the profile (2) are produced from hard plastic material that can be calibrated and, during the calibration of the profile (2) following the extrusion in a calibration device (12) downstream of the extrusion tool (4), are guided in a dimensionally stable manner over a certain distance and
are pressed against one another into the firm connection holding the mesh fabric strip (3).

2. Method according to Claim 1, **characterized**
**in that** the two parts are formed as profile limbs (18, 25) of the profile (2), and in that the profile (2) is extruded in one piece with the profile limbs (18, 25),
**in that** at least one part (16) of the mesh fabric strip (3) is guided through the extrusion tool (4) in a manner free of extrusion pressure and at least one section (26) of the part (16) of the mesh fabric strip (3) is introduced in between the two profile limbs (18, 25) of the profile (2),
**in that** the profile (2) is guided in a dimensionally stable manner over a certain distance in the calibration device (12) and is cooled in the process, the still plastic profile limbs (18, 25) of the profile (2) being pressed against each other in the calibration device (12) and in the process forming a firm connection to each other, so that they hold the section (26) of the mesh fabric strip (3) firmly between them.

3. Method according to Claim 1, **characterized**
**in that** at least two parts (18, 44; 61, 62) of the profile (40; 60) that are provided in order to fix the mesh fabric strip (3) are extruded by means of a respective extrusion tool (104, 104'),
**in that** at least one part (16) of the mesh fabric strip (3) is fed through the first extrusion tool (104) in a manner free of extrusion pressure or is subsequently fed to the first extrusion tool (104), and
**in that** at least one section of the part (16) of the mesh fabric strip (3) that is spaced apart from the edges of the mesh fabric strip (3) is introduced in between the two parts (18, 44; 61, 62) of the profile (40; 60),
**in that** the profile (40; 60) is guided in a dimensionally stable manner over a certain distance in the calibration device (12) and is cooled in the process,
the still plastic parts (18, 44; 61, 62) of the profile (40; 60) being pressed against each other in the calibration device (112) and in the process forming a firm connection to each other, so that they hold the section of the part (16) of the mesh fabric strip (3) firmly between them.

4. Method according to one of Claims 1 to 3, **characterized in that** the second part (25) and/or a further part for fixing the mesh fabric strip (3) or a further mesh fabric strip is or are produced by means of the extrusion tool, an additional extrusion tool or a co-extrusion tool (104').

5. Method according to Claim 4, **characterized in that** the additional extrusion tool and/or the co-extrusion tool (104') is or are arranged on or integrated in the extrusion tool (4).

6. Method according to one of Claims 3 to 5, **characterized in that** the mesh fabric strip (3) rests on the extruded profile or the first part of the latter after the extrusion tool (4), and **in that** the second part (44) is laid on the mesh fabric strip (3).

7. Apparatus for producing a profile (2) from extruded plastics material with at least one net-like mesh fabric strip (3) connected thereto, an extrusion tool (4) having at least one extrusion duct (8, 9) for the plastic compound forming the profile (2) and supplied by an extruder (7) and a feed device (13) for the mesh fabric strip (3),
**characterized**
**in that** the extrusion duct (8, 9) and the feed device (13) for the mesh fabric strip (3) run separately as far as the tool outlet (10),
**in that** the feed device (13) for the mesh fabric strip (3) runs through the extrusion tool (4) to the tool outlet (10),
**in that** the feed device (13) at the tool outlet (10) positions the mesh fabric strip (3) in the correct position in relation to the profile (2), and
**in that** a calibration device (12) is arranged downstream of the extrusion tool (4) and the guidance in the calibration device (12) effects the joining of parts (18, 25) of the profile (2) holding the mesh fabric strip (3) to the mesh fabric strip (3) by pressing them against each other.

8. Apparatus according to Claim 7, **characterized in that** two extrusion ducts are provided, and **in that** the second extrusion duct (9) in some sections runs separately from the first extrusion duct (8) and bypasses the feed device (13).

9. Apparatus according to Claim 7 or 8, **characterized in that** the first extrusion duct (8) in the extrusion tool (4) runs substantially in the longitudinal direction.

10. Apparatus according to one of Claims 7 to 9, **characterized in that** an additional extrusion tool or a co-extrusion tool is provided in order to produce the second part and/or a further part for fixing the mesh fabric strip (3) or a further mesh fabric strip.

11. Apparatus according to Claim 10, **characterized in that** the additional extrusion tool and/or the co-extrusion tool (104') is or are arranged on or integrated in the extrusion tool (4).

12. Profile (2; 40; 60) of extruded plastics material with a net-like mesh fabric strip (3) joined to the profile (2; 40; 60),
the profile (2; 40; 60) having at least two extruded parts (18, 25; 18, 44; 61, 62) and the mesh fabric strip (3) being held between the parts (18, 25; 18, 44; 61, 62) of the profile (2; 40; 60) that are pre-formed during extrusion and pressed against each other in the plastic state,
**characterized**
**in that** the extruded parts (18, 25; 18, 44; 61, 62) consist of calibrated hard plastics material and
**in that** the profile (2; 40; 60) is produced by a method according to one of Claims 1 to 6 and by using an apparatus according to one of Claims 7 to 11.

## Revendications

1. Procédé de fabrication d'une barrette profilée (2) en matière plastique extrudée, avec au moins une bande (3) en tissu à mailles du type filet, reliée à ladite barrette profilée (2), sachant
que ladite barrette profilée (2) est extrudée, au moyen d'un outil d'extrusion (4), avec deux parties (18, 25) prévues pour la fixation de la bande (3) en tissu à mailles,
que ladite bande (3) en tissu à mailles est insérée, sans aucune pression d'extrusion, entre les deux parties (18, 25) de la barrette profilée (2), et
que lesdites parties (18, 25) de la barrette profilée (2), encore à l'état plastique, sont pressées l'une contre l'autre en une liaison rigide, de telle sorte qu'elles retiennent fermement entre elles ladite bande (3) en tissu à mailles,
**caractérisé par le fait**
**que** les parties (18, 25) de la barrette profilée (2), encore à l'état plastique, sont produites en une matière plastique dure apte au calibrage et sont guidées sur un trajet avec stabilité de forme, lors du calibrage de la barrette profilée (2) succédant directement à l'extrusion, dans un système de calibrage (12) implanté en aval de l'outil d'extrusion (4), puis
sont pressées l'une contre l'autre pour procurer la liaison rigide retenant ladite bande (3) en tissu à mailles.

2. Procédé selon la revendication 1,
**caractérisé par le fait**
**que** les deux parties se présentent comme des branches profilées (18, 25) de la barrette profilée (2), et ladite barrette profilée (2) est extrudée d'un seul tenant avec lesdites branches profilées (18, 25) ;
**qu'**au moins un segment (16) de la bande (3) en tissu à mailles est guidé à travers l'outil d'extrusion (4) sans aucune pression d'extrusion, et au moins un tronçon (26) dudit segment (16) de ladite bande (3) en tissu à mailles est inséré entre les deux branches profilées (18, 25) de la barrette profilée (2) ;
**que** la barrette profilée est guidée sur un trajet avec stabilité de forme, dans le système de calibrage (12), en étant alors refroidie, sachant que les branches (18, 25) de ladite barrette profilée, encore à l'état plastique, sont pressées l'une contre l'autre dans ledit système de calibrage (12) et donnent alors conjointement naissance à une liaison rigide, de telle sorte qu'elles retiennent fermement entre elles ledit tronçon (26) de ladite bande (3) en tissu à mailles.

3. Procédé selon la revendication 1,
**caractérisé par le fait**
**qu'**au moins deux parties (18, 44 ; 61, 62) de la barrette profilée (40 ; 60), prévues pour la fixation de la bande (3) en tissu à mailles, sont extrudées au moyen d'un outil respectif d'extrusion (104, 104') ;
**qu'**au moins un segment (16) de ladite bande (3) en tissu à mailles parcourt le premier outil d'extrusion (104) sans aucune pression d'extrusion, ou bien est délivré audit outil d'extrusion (104) dans la continuité directe, et au moins un tronçon dudit segment (16) de ladite bande (3) en tissu à mailles, espacé des bords de ladite bande (3) en tissu à mailles, est inséré entre les deux parties (18, 44 ; 61, 62) de la barrette profilée (40 ; 60) ;
**que** la barrette profilée (40 ; 60) est guidée sur un trajet avec stabilité de forme, dans le système de calibrage (112), en étant alors refroidie, sachant que les parties (18, 44 ; 61, 62) de ladite barrette profilée (40 ; 60), encore à l'état plastique, sont pressées l'une contre l'autre dans ledit système de calibrage (112) et donnent alors conjointement naissance à une liaison rigide, de telle sorte qu'elles retiennent fermement entre elles ledit tronçon dudit segment (16) de ladite bande (3) en tissu à mailles.

4. Procédé selon l'une des revendications 1 à 3,
**caractérisé par le fait que** la seconde partie (25), et/ou une partie supplémentaire dédiée à la fixation de la bande (3) en tissu à mailles ou d'une autre bande en tissu à mailles, est (sont) respectivement produite(s) au moyen de l'outil d'extrusion, d'un outil additionnel d'extrusion ou d'un outil de coextrusion (104').

5. Procédé selon la revendication 4,
**caractérisé par le fait que** l'outil additionnel d'extrusion, et/ou l'outil de coextrusion (104'), est (sont) respectivement disposé(s) sur l'outil d'extrusion (4), ou intégré(s) dans ce dernier.

6. Procédé selon l'une des revendications 3 à 5,
**caractérisé par le fait que** la bande (3) en tissu à mailles repose respectivement, dans la continuité directe de l'outil d'extrusion (4), sur la barrette profilée extrudée ou sur la première partie de cette dernière ; et **par le fait que** la seconde partie (44) est mise en applique contre ladite bande (3) en tissu à mailles.

7. Dispositif de fabrication d'une barrette profilée (2) en matière plastique extrudée, avec au moins une bande (3) en tissu à mailles du type filet, reliée à ladite barrette, un outil d'extrusion (4) comportant au moins un canal d'extrusion (8, 9) destiné à la masse de matière plastique qui forme la barrette profilée (2) et est délivrée par une extrudeuse (7), et un système d'amenée (13) affecté à ladite bande (3) en tissu à mailles,
**caractérisé par le fait**
**que** le canal d'extrusion (8, 9), et le système d'amenée (13) affecté à la bande (3) en tissu à mailles, s'étendent séparément jusqu'à la sortie (10) de l'outil ;
**que** ledit système d'amenée (13), destiné à ladite bande (3) en tissu à mailles, parcourt l'outil d'extrusion (4) vers la sortie (10) de l'outil ;
**que** ledit système d'amenée (13) place ladite bande (3) en tissu à mailles, à la sortie (10) de l'outil, dans la position correcte vis-à-vis de la barrette profilée (2) ; et
**qu'**un système de calibrage (12) est installé en aval de l'outil d'extrusion (4), et le guidage s'opérant dans ledit système de calibrage (12) provoque la liaison, par compression réciproque, de la bande (3) en tissu à mailles avec des parties (18, 25) de la barrette profilée qui retiennent ladite bande (3) en tissu à mailles.

8. Dispositif selon la revendication 7,
**caractérisé par le fait que** deux canaux d'extrusion sont prévus ; et **par le fait que** le second canal d'extrusion (9) s'étend séparément du premier canal d'extrusion (8), par zones, et en contournant le système d'amenée (13).

9. Dispositif selon la revendication 7 ou 8,
**caractérisé par le fait que** le premier canal d'extrusion (8) parcourt sensiblement l'outil d'extrusion (4) dans la direction longitudinale.

10. Dispositif selon l'une des revendications 7 à 9,
**caractérisé par le fait qu'**un outil additionnel d'extrusion ou un outil de coextrusion est prévu pour produire la seconde partie et/ou une partie supplémentaire dédiée à la fixation de la bande (3) en tissu à mailles ou d'une autre bande en tissu à mailles.

11. Dispositif selon la revendication 10,
**caractérisé par le fait que** l'outil additionnel d'extrusion, et/ou l'outil de coextrusion (104'), est (sont) respectivement disposé(s) sur l'outil d'extrusion (4), ou intégré(s) dans ce dernier.

12. Barrette profilée (2 ; 40 ; 60) en matière plastique extrudée, avec une bande (3) en tissu à mailles du type filet, reliée à ladite barrette profilée (2 ; 40 ; 60), sachant que ladite barrette profilée (2 ; 40 ; 60) comprend au moins deux parties extrudées (18, 25 ; 18, 44 ; 61, 62), et que ladite bande (3) en tissu à mailles est retenue entre lesdites parties (18, 25 ; 18, 44 ; 61, 62) de ladite barrette profilée (2 ; 40 ; 60) qui sont préformées lors de l'extrusion et sont pressées l'une contre l'autre à l'état plastique,
**caractérisée par le fait**
**que** lesdites parties extrudées (18, 25 ; 18, 44 ; 61, 62) consistent en une matière plastique dure calibrée ; et
**que** ladite barrette profilée (2 ; 40 ; 60) est fabriquée, respectivement, selon un procédé conforme à l'une des revendications 1 à 6, ou à l'aide d'un dispositif selon l'une des revendications 7 à 11.
